# FASCICULE DE BREVET EUROPEEN

(11) **EP 0 715 088 B1**
(45) Date de publication et mention de la délivrance du brevet: **11.04.2001**
(21) Numéro de dépôt: 95440079.2
(22) Date de dépôt: 30.11.1995
(51) Int. Cl.: F16D 11/06, A01B 71/06

(54) **Mécanisme de transmission débrayable**
Ausschaltbare Kraftübertragungsvorrichtung
Declutchable transmission mechanism

(30) Priorité: 02.12.1994 FR 9414671
(43) Date de publication de la demande: 05.06.1996
(73) Titulaire: KUHN S.A., 67700 Saverne (FR)
(72) Inventeur: Aron, Jérôme, F-67330 Dossenheim sur Zinsel (FR); Haberkorn, Jean-Paul, F-67700 Monswiller (FR); Meyer, Etienne, F-67700 Saverne (FR)

(56) Documents cités:
- US-A- 4 204 589

## Description

La présente invention concerne un mécanisme de transmission débrayable destiné, durant son utilisation, à tourner autour d'un axe de rotation et comportant :
- un ensemble moteur,
- un ensemble récepteur,
- au moins un élément d'entraînement engagé dans des logements correspondant desdits ensembles,
et
- un mécanisme de débrayage comportant d'une part un organe de débrayage destiné à agir directement ou indirectement sur lesdits éléments d'entraînement de telle sorte que dans une première position dudit organe de débrayage, lesdits éléments d'entraînement sont engagés dans leurs logements et que dans une deuxième position dudit organe de débrayage lesdits éléments d'entraînement sont extraits de leurs logements, et d'autre part un dispositif de commande destiné à placer l'organe de débrayage de sa première position dans sa deuxième position, ledit dispositif de commande comportant un premier levier et ledit organe de débrayage étant guidé en rotation autour d'un axe géométrique au moins sensiblement parallèle à l'axe de rotation du mécanisme de transmission de sorte que, lorsque le premier levier rencontre un obstacle au cours de la rotation du mécanisme de transmission, l'organe de débrayage est pivoté autour dudit axe géométrique de sa première position dans sa deuxième position.

Il est connu dans l'état de la technique un tel mécanisme de transmission débrayable destiné, durant son utilisation, à tourner autour d'un axe de rotation. Ce mécanisme de transmission débrayable comporte un ensemble moteur et un ensemble récepteur destinés à tourner autour dudit axe de rotation.

L'ensemble récepteur est entraîné par l'ensemble moteur au moyen d'éléments d'entraînement liés d'une part audit ensemble moteur et engagés d'autre part dans des logements prévus dans ledit ensemble récepteur. Le mécanisme de transmission débrayable est également pourvu d'un mécanisme de débrayage comportant une cloche entourant l'ensemble récepteur et destiné à désolidariser ledit ensemble récepteur dudit ensemble moteur en agissant indirectement sur les éléments d'entraînement pour les extraire de leur logement. A cet effet, la cloche comporte un alésage de forme conique destiné lors d'un déplacement axial de ladite cloche, à agir indirectement sur les éléments d'entraînement par l'intermédiaire d'organes d'extraction guidés radialement en translation dans l'ensemble récepteur.

En position embrayée, les éléments d'entraînement sont engagés dans les logements prévus dans l'ensemble récepteur, liant ainsi l'ensemble récepteur à l'ensemble moteur. Pour passer en position débrayée, la cloche est déplacée axialement sur l'ensemble récepteur au moyen d'un dispositif de commande; l'alésage conique de la cloche translate alors radialement les organes d'extraction en direction de l'axe de rotation, lesquels poussent les éléments d'entraînement hors de leur logement. Dans la position débrayée, l'ensemble récepteur est désolidarisé de l'ensemble moteur.

Pour repasser en position embrayée, la cloche est ramenée dans sa position initiale ; les organes d'extraction sont repoussés vers l'extérieur par des ressorts de rappel ; chaque élément d'entraînement retourne dans son logement sous l'action d'un ressort respectif ; l'entraînement de l'ensemble récepteur est à nouveau assuré.

Comme décrit auparavant, le mécanisme de débrayage du mécanisme de transmission débrayable connu comporte une cloche qui doit être déplacée axialement. Une telle conception suppose un dispositif de commande relativement complexe et pouvant être difficile à manoeuvrer. Du reste, la translation de la cloche peut devenir problématique lorsque le mécanisme de transmission est encrassé ou grippé après une certaine période de non-utilisation. Le dispositif de commande peut alors être soumis à des contraintes relativement importantes lors du débrayage. Il pourrait même arriver que le mécanisme de transmission débrayable ne puisse même plus être débrayé.

Il est également connu un document US-A-4 204 589 qui décrit un dispositif de transmission débrayable comprenant dans les grandes lignes un ensemble moteur, un ensemble récepteur, des éléments d'entraînement composés de rouleaux et un mécanisme de débrayage. Ce mécanisme de débrayage comporte un organe de débrayage qui agit directement sur les rouleaux de manière à les coincer entre ledit organe de débrayage et l'ensemble moteur et l'ensemble récepteur pour assurer la transmission du mouvement entre ces derniers.

Pour ce faire, l'organe de débrayage comporte des évidements ainsi que l'ensemble moteur et l'ensemble récepteur, les rouleaux étant destinés à être logés dans lesdits évidements desdits ensembles moteur et récepteur lors de la transmission du mouvement.

Pour interrompre la transmission du mouvement entre l'ensemble moteur et l'ensemble récepteur, l'organe de débrayage est tourné quelque peu sur lui-même au moyen d'un dispositif de commande qui comporte un levier destiné à rencontrer un obstacle au cours de la rotation dudit dispositif de transmission. A cet effet, les évidements de l'organe de débrayage s'étendent en face des évidements des ensembles moteur et récepteur ce qui autorise aux rouleaux de sortir des logements desdits ensembles moteur et récepteur pour ne plus permettre l'entraînement.

Cependant ce dispositif de transmission débrayable présente un inconvénient majeur. En effet, un mauvais entretien du dispositif de transmission risque de ne pas permettre la sortie des rouleaux des logements des ensembles moteur et récepteur lorsque l'organe de débrayage a été tourné. Ceci peut notamment arriver lorsque la vitesse de rotation du dispositif de transmission est faible ou encore lorsque les rouleaux sont collés aux ensembles moteur et récepteur suite à la corrosion ou à la poussière par exemple.

La présente invention a pour but de remédier à ces problèmes.

A cet effet, le mécanisme de transmission débrayable selon l'invention est caractérisé en ce que:
- les éléments d'entraînement sont liés à l'un des ensembles;
- le dispositif de commande permet de placer l'organe de débrayage dans l'une ou l'autre de ses positions;
- le premier levier du dispositif de commande est lié à l'un desdits ensembles au moyen d'une première articulation et pivote autour de l'axe de ladite première articulation et fait pivoter l'organe de débrayage; et
- le dispositif de commande comporte un deuxième levier lié au premier levier au moyen d'une deuxième articulation et à l'organe de débrayage au moyen d'une troisième articulation.

Dans le mécanisme de transmission débrayable de l'invention, il est prévu que l'organe de débrayage pivote autour d'un axe géométrique au moins sensiblement parallèle à l'axe de rotation du mécanisme de transmission pour transposer ledit mécanisme de transmission de la position embrayée dans la position débrayée et vice-versa. Un tel mouvement permet ladite transposition, même si le mécanisme de transmission est encrassé. Du reste, un grippage de l'organe de débrayage est quasiment impossible, même si le mécanisme de transmission n'est pas utilisé durant une certaine période.

Par ailleurs, le dispositif de commande est très simple, puisqu'il comporte un levier lié à l'ensemble moteur ou à l'ensemble récepteur au moyen d'une articulation. Sa manoeuvre est également très simple puisqu'un obstacle introduit dans le volume qu'il balaye lors de la rotation du mécanisme de transmission, le fait pivoter autour de l'axe de ladite articulation.

Le débrayage du mécanisme de transmission de l'invention est ainsi toujours parfaitement possible.

Selon une caractéristique supplémentaire de l'invention, il peut être avantageusement prévu que l'axe géométrique autour duquel peut pivoter l'organe de débrayage, soit au moins sensiblement confondu avec l'axe de rotation autour duquel peut tourner le mécanisme de transmission lors de son utilisation.

Selon une autre caractéristique supplémentaire de l'invention, il peut également être avantageusement prévu que l'axe de ladite première articulation soit au moins sensiblement parallèle à l'axe de rotation autour duquel peut tourner le mécanisme de transmission lors de son utilisation.

Selon une autre caractéristique avantageuse de l'invention, il peut être prévu qu'un moyen de verrouillage verrouille automatiquement le dispositif de commande lorsque l'organe de débrayage arrive ou est dans la deuxième position. Le mécanisme de transmission restera ainsi en position débrayée jusqu'à ce qu'il soit à nouveau transposé dans la position embrayée, soit manuellement, soit conformément à une caractéristique supplémentaire, à l'aide d'un moyen de déverrouillage annulant automatiquement l'action du moyen de verrouillage.

Ce moyen de déverrouillage peut comporter un levier de déverrouillage lié à l'ensemble moteur. Au cas où le dispositif de commande est lié à l'ensemble moteur, le levier de déverrouillage peut être avantageusement lié à l'ensemble moteur au moyen d'une articulation de telle manière que, lorsque ledit levier de déverrouillage rencontre une butée extérieure prévue à cet effet, il pivote autour de l'axe de ladite articulation et annule l'action du moyen de verrouillage. Après annulation de l'action du moyen de verrouillage, le levier de déverrouillage peut être maintenu hors de portée de la butée extérieure au moyen d'un organe de maintien lequel peut comporter un ressort à cet effet.

Selon une autre caractéristique supplémentaire de l'invention, l'axe de la deuxième articulation et l'axe de cette troisième articulation seront au moins sensiblement parallèles à l'axe de la première articulation liant le premier levier du dispositif de commande à l'ensemble moteur ou à l'ensemble récepteur. Du reste, la première articulation, la deuxième articulation et la troisième articulation peuvent être implantées de telle manière que, lorsque l'organe de débrayage se trouve dans sa deuxième position, la position des leviers soit verrouillée par arc-boutement. Une telle disposition desdites articulations constituera donc un moyen de verrouillage verrouillant automatiquement le dispositif de commande lorsque l'organe de débrayage arrive ou se trouve dans sa deuxième position.

Dans une famille de réalisations, chaque élément d'entraînement peut être guidé dans l'ensemble moteur ou dans l'ensemble récepteur auquel il est lié. Un ressort peut être prévu, qui pousse ledit élément d'entraînement dans son logement prévu dans l'autre ensemble, c'est-à-dire l'ensemble récepteur ou l'ensemble moteur. Dans une telle solution, l'organe de débrayage peut agir indirectement sur lesdits éléments d'entraînement au moyen d'organes d'extraction, guidés dans l'ensemble où sont prévus les logements dans lesquels ces éléments d'entraînement sont destinés à être engagés. Avantageusement, ledit organe d'extraction peut être lié à l'organe de débrayage au moyen d'un plot guidé dans une ouverture allongée correspondante prévue dans ledit organe de débrayage, ladite ouverture allongée étant telle que, lors du passage de l'organe de débrayage de la première position dans la deuxième position, l'organe d'extraction extraie l'élément d'entraînement correspondant de son logement.

Dans une autre famille de réalisations, chaque élément d'entraînement peut être guidé dans l'ensemble moteur ou dans l'ensemble récepteur auquel il est lié, et peut être maintenu par l'organe de débrayage dans son logement prévu dans l'autre ensemble, c'est-à-dire l'ensemble récepteur ou l'ensemble moteur. Avantageusement, lesdits éléments d'entraînement peuvent être liés à l'organe de débrayage au moyen de plots correspondants guidés chacun dans une ouverture allongée correspondante prévue dans ledit organe de débrayage, ladite ouverture allongée étant telle que, lors du passage de l'organe de débrayage de la première position dans la deuxième position, les éléments d'entraînement sont extraits de leurs logements.

Dans ces deux familles de réalisations, les ouvertures allongées prévues dans l'organe de débrayage peuvent être avantageusement au moins sensiblement rectilignes.

Du reste, chaque élément d'entraînement peut être avantageusement guidé dans un siège correspondant prévu dans l'ensemble moteur ou l'ensemble récepteur auquel il est lié.

Dans la première famille de réalisations, chaque organe d'extraction peut aussi être guidé dans un siège correspondant prévu dans l'ensemble moteur ou l'ensemble récepteur où est prévu le logement dans lequel l'élément d'entraînement correspondant est destiné à être engagé.

Chaque élément d'entraînement peut être guidé en translation dans son siège correspondant.

Chaque organe d'extraction peut aussi être guidé en translation dans son siège correspondant.

De préférence, ces sièges s'étendront au moins sensiblement radialement.

Lorsqu'il est prévu que le mécanisme de transmission débrayable comporte plusieurs éléments d'entraînement, ceux-ci seront avantageusement répartis au moins sensiblement régulièrement autour de l'axe de rotation autour duquel peut tourner le mécanisme de transmission débrayable lors de son utilisation.

Selon une autre caractéristique supplémentaire de l'invention, l'organe de débrayage peut entourer l'ensemble moteur et l'ensemble récepteur.

Cet organe de débrayage peut être constitué d'une couronne circulaire plate.

Dans une solution préférentielle, mais sans pour autant limitative, le dispositif de commande est lié à l'ensemble moteur qui s'étend autour de l'ensemble récepteur.

L'invention concerne également une machine agricole comportant des organes de travail destinés à être animés par une source motrice au moyen d'organes de transmission comportant un mécanisme de transmission débrayable selon l'invention, un obstacle étant introduit dans le volume balayé par ledit mécanisme de transmission débrayable lorsque la transmission du mouvement entre la source motrice et les organes de travail doit être interrompue.

Le mécanisme de transmission débrayable selon l'invention est particulièrement bien adapté à une telle machine agricole comportant en sus des organes de protection masquant, en position opérationnelle, lesdits organes de travail ou/et certains au moins desdits organes de transmission. Dans ce cas en effet, ledit obstacle peut être introduit dans le volume balayé par le mécanisme de transmission débrayable lorsque l'un au moins desdits organes de protection est écarté de sa position opérationnelle. Dans ce cas, la transmission du mouvement entre la source motrice et les organes de travail est interrompue ou ne peut être assurée. Les risques de blessures sont ainsi grandement diminués, voire tout simplement supprimés.

Comme dit auparavant, le dispositif de commande du mécanisme de transmission débrayable peut être lié à l'ensemble moteur et ledit mécanisme peut, en sus, comporter un levier de déverrouillage également lié à l'ensemble moteur au moyen d'une articulation de telle sorte qu'en cas de rencontre d'une butée extérieure prévue à cet effet, il pivote autour de l'axe de ladite articulation et annule l'action du moyen de verrouillage verrouillant le dispositif de commande lorsque l'organe de débrayage arrive ou est dans la deuxième position. Dans ce cas, une butée extérieure peut être introduite dans le volume balayé par ledit mécanisme de transmission débrayable lorsque la transmission du mouvement entre la source motrice et les organes de travail doit à nouveau être assurée. Cette mise en place de la butée extérieure peut avantageusement s'opérer lorsque lesdits organes de protection sont remis en position opérationnelle.

D'autres objets et caractéristiques de l'invention ressortiront de la description ci-après, avec référence aux dessins annexés qui représentent, à titre d'exemples non limitatifs, quelques formes de réalisations du mécanisme de transmission débrayable selon l'invention.

Sur ces dessins :
- La figure 1 est une vue de dessus d'une machine agricole liée à un véhicule moteur et équipée d'un mécanisme de transmission débrayable selon l'invention ;
- La figure 2 est une vue en plan d'une première forme de réalisation d'un mécanisme de transmission débrayable selon l'invention, en position embrayée ;
- La figure 3 est une vue latérale du mécanisme de transmission débrayable représenté sur la figure 2 ;
- La figure 4 est une vue en plan dudit mécanisme de transmission débrayable selon la première forme de réalisation, en position débrayée ;
- La figure 5 est une vue en plan d'une deuxième forme de réalisation du mécanisme de transmission débrayable selon l'invention, en position embrayée ;
- La figure 6 est une vue en plan d'une troisième forme de réalisation d'un mécanisme de transmission débrayable selon l'invention, en position embrayée.

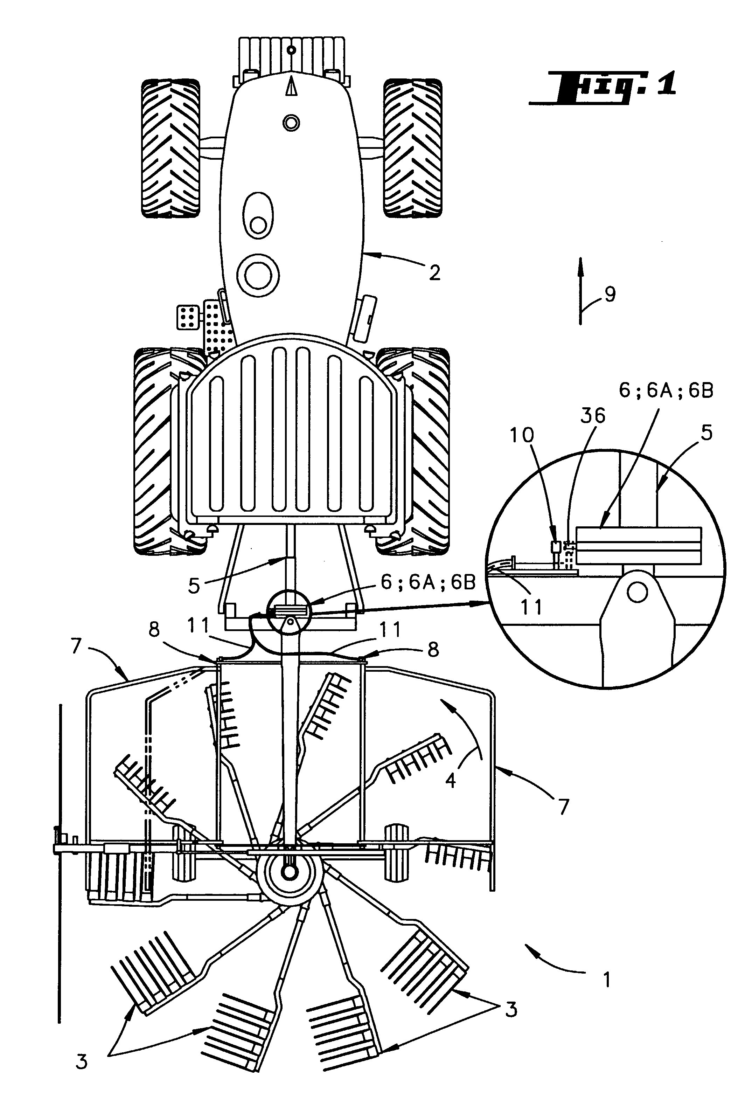

Sur la figure 1, est représentée une machine agricole (1) attelée à un tracteur agricole (2). Ladite machine agricole (1) comporte des organes de travail (3) animés, durant l'utilisation, à partir d'une source motrice (dans l'exemple représenté, cette source motrice est constituée par la prise de force du tracteur agricole (2) et l'animation des organes de travail (3) est matérialisée par la flèche (4)). La transmission du mouvement depuis ladite source motrice jusqu'aux organes de travail (3) est assurée par des organes de transmission (5) incluant un mécanisme de transmission débrayable (6 ; 6A ; 6B).

Ladite machine agricole (1) comporte en sus des organes de protection (7) qui masquent, en position opérationnelle, les organes de travail (3) et évitent ainsi que des personnes puissent arriver en contact avec lesdits organes de travail (3) comme cela est parfaitement connu dans le domaine des machines agricoles. Dans le but de réduire la largeur de la machine agricole (1) pour le transport ou pour pouvoir facilement accéder à certains organes de ladite machine agricole (1), lesdits organes de protection (7) peuvent être mis dans une position non opérationnelle, par exemple par pivotement vers le haut autour d'un axe (8) respectif au moins sensiblement dirigé suivant la direction de déplacement (9). Sur la figure 1, la position non opérationnelle a été représentée en traits mixtes.

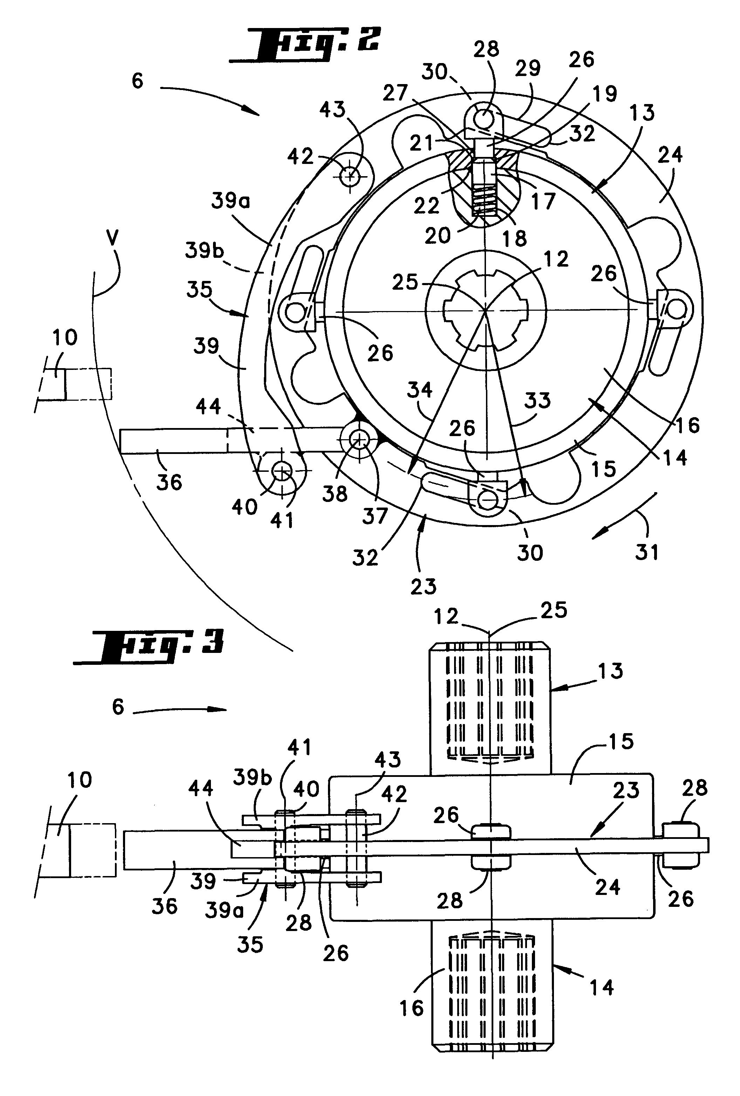

Chaque organe de protection (7) est en liaison avec un taquet (10) (obstacle) au moyen d'une commande à distance (11), de telle sorte que ledit taquet (10) soit introduit dans le volume (V) (figure 2) balayé par le mécanisme de transmission débrayable (6 ; 6A ; 6B) lorsque l'un au moins des organes de protection (7) est écarté de sa position opérationnelle. Ceci a alors pour effet de placer le mécanisme de transmission débrayable (6 ; 6A ; 6B) en position débrayée et d'interrompre la transmission du mouvement entre la source motrice et les organes de travail (3). Sur l'agrandissement inclus dans la figure 1, on a représenté en traits mixtes l'obstacle (10) introduit dans le volume balayé par le mécanisme de transmission débrayable (6 ; 6A ; 6B).

Une première forme de réalisation d'un tel mécanisme de transmission débrayable apparaît plus en détail sur les figures 2 à 4. Il est destiné, durant son utilisation, à tourner autour de l'axe de rotation (12). Il comprend un ensemble moteur (13) lié aux organes de transmission (5) côté source motrice et un ensemble récepteur (14) lié aux organes de transmission (5) côté organes de travail (3). L'ensemble moteur (13) est constitué d'une couronne (15) guidée en rotation sur un moyeu (16) formant l'ensemble récepteur (14) (ce guidage en rotation est au moins sensiblement centré sur l'axe de rotation (12)).

En position embrayée telle que représentée sur les figures 1 et 2, l'ensemble récepteur (14) est accouplé à l'ensemble moteur (13) au moyen de quatre éléments d'entraînement (17) répartis au moins sensiblement régulièrement autour de l'axe de rotation (12). Chaque élément d'entraînement (17) est guidé en translation dans un siège (18) au moins sensiblement radial, prévu dans l'ensemble récepteur (14). Il est par ailleurs engagé dans un logement (19) prévu dans l'ensemble moteur (13) et y est maintenu en place par un ressort (20) tendant à pousser ledit élément d'entraînement (17) hors de son siège (18). Chaque élément d'entraînement (17) ou/et chaque logement (19) peuvent présenter une forme adéquate favorisant l'engagement de l'élément d'entraînement (17) dans un logement (19). Dans l'exemple représenté, l'extrémité extérieure de l'élément d'entraînement (17) et l'entrée du logement (19) présentent chacune, à cet effet, un chanfrein (21, respectivement 22).

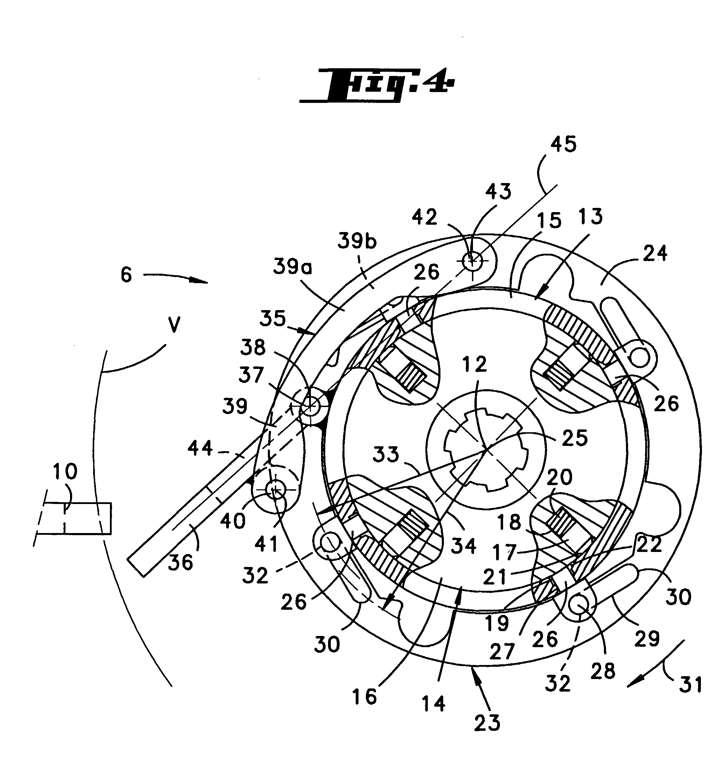

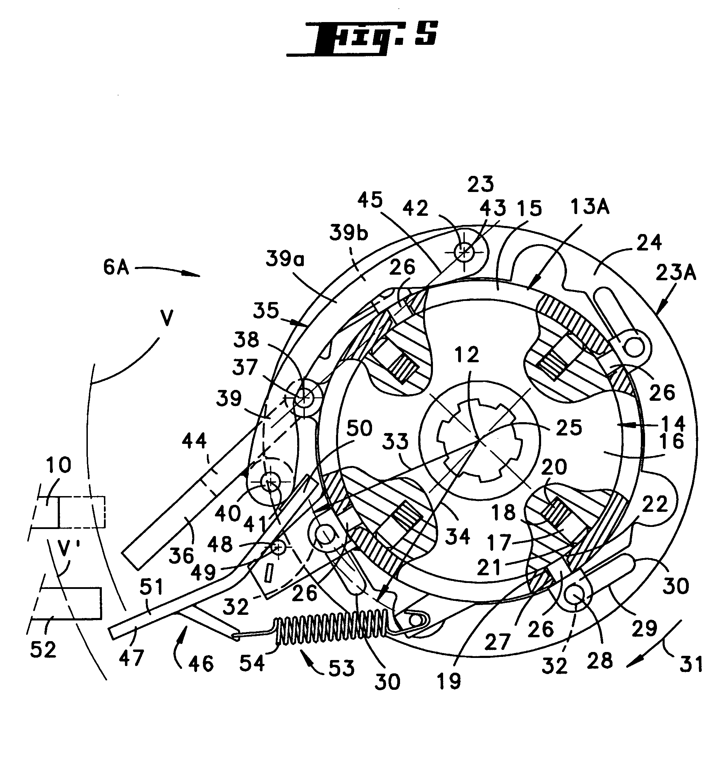

Le mécanisme de transmission débrayable (6) comporte également un mécanisme de débrayage (23). Celui-ci comporte tout d'abord un organe de débrayage (24) constitué d'une couronne circulaire plate entourant l'ensemble moteur (13) et guidée en rotation autour d'un axe géométrique (25) au moins sensiblement parallèle à l'axe de rotation (12) du mécanisme de transmission débrayable (6) (dans l'exemple représenté, l'axe géométrique (25) est confondu avec ledit axe de rotation (12)). L'organe de débrayage (24) est destiné à agir indirectement sur les éléments d'entraînement (17) au moyen d'organes d'extraction (26) guidés chacun en translation dans un siège (27) correspondant au moins sensiblement radial, prévu dans l'ensemble moteur (13) au moins sensiblement dans le prolongement d'un logement (19) correspondant. Le mécanisme de transmission débrayable (6) comporte ainsi également quatre organes d'extraction (26). Chaque organe d'extraction (26) est lié à l'organe de débrayage (24) au moyen d'un plot (28) guidé dans une ouverture allongée (29) correspondante prévue dans ledit organe de débrayage (24). Chaque ouverture allongée (29) est au moins sensiblement rectiligne et est inclinée de telle manière que son extrémité arrière (30) - compte tenu du sens de rotation (31) du mécanisme de transmission débrayable (6) - soit radialement plus éloignée de l'axe de rotation (12) que son extrémité avant (32). La différence de valeur entre le rayon (33) sur lequel évolue l'extrémité arrière (30) et le rayon (34) sur lequel évolue l'extrémité avant (32) correspond à la course rectiligne de l'organe d'extraction (26). En position embrayée (première position), le plot (28) de chaque organe d'extraction (26) se trouve dans le voisinage de l'extrémité arrière (30) de l'ouverture allongée (29) correspondante (figure 2). En position débrayée par contre (deuxième position), le plot (28) de chaque organe d'extraction (26) se trouve dans le voisinage de l'extrémité avant (32) de l'ouverture allongée (29) correspondante (figure 4).

Le mécanisme de débrayage (23) comporte encore un dispositif de commande (35) comportant un premier levier (36) lié à l'ensemble moteur (13) au moyen d'une première articulation (37) du type pivot d'axe (38) au moins sensiblement parallèle à l'axe de rotation (12) et un deuxième levier (39) lié d'une part au premier levier (36) au moyen d'une deuxième articulation (40) du type pivot d'axe (41) au moins sensiblement parallèle à l'axe (38) de la première articulation (37) et d'autre part à l'organe de débrayage (24) au moyen d'une troisième articulation (42) du type pivot d'axe (43) également au moins sensiblement parallèle à l'axe (38) de la première articulation (37). Sur la figure 3, on voit que le deuxième levier (39) est en fait composé de deux parties (39a, 39b) lesquelles s'étendent au moins sensiblement symétriquement de part et d'autre de l'organe de débrayage (24) et du premier levier (36). En ce qui concerne le premier levier (36), celui-ci comporte, à son extrémité où il est lié à l'ensemble moteur (13), une fente (44) dans laquelle passe l'organe de débrayage (24).

On notera également que la première articulation (37), la deuxième articulation (40) et la troisième articulation (42) sont implantées de telle manière que lorsque l'organe de débrayage (24) se trouve dans la deuxième position (figure 4: position débrayée), la position des leviers (36, 39) soit verrouillée par arc-boutement. En effet, en considérant le plan (45) (figure 4) contenant l'axe (38) de la première articulation (37) et l'axe (43) de la troisième articulation (42), on voit que l'axe (41) de la deuxième articulation (40) passe du côté dudit plan (45) où s'étend l'ensemble moteur (13), avant que l'organe de débrayage (24) n'atteigne la deuxième position. A cet effet, le deuxième levier (39) peut d'ailleurs être avantageusement réalisé en acier à ressort.

Cette implantation particulière des trois articulations (37, 40, 42) constitue ainsi un moyen de verrouillage verrouillant automatiquement le dispositif de commande (35) lorsque l'organe de débrayage (24) arrive ou est dans la deuxième position (figure 4 : position débrayée).

Le mécanisme de transmission débrayable (6) selon cette première forme de réalisation fonctionne de la manière suivante :

Lors du travail, les organes de travail (3) de la machine agricole (1) sont animés au moyen de la source motrice (prise de force du tracteur agricole (2)) par l'intermédiaire des organes de transmission (5) comportant le mécanisme de transmission débrayable (6) selon l'invention. Ce faisant, l'ensemble moteur (13) est animé d'un mouvement de rotation (31) autour de l'axe de rotation (12) et entraîne en rotation l'ensemble récepteur (14) autour de l'axe de rotation (12) au moyen des quatre éléments d'entraînement (17) maintenus dans leur logement respectif (19) sous l'action du ressort (20) correspondant. Comme visible sur la figure 2, la transmission du mouvement est assurée tant que le taquet (10) ne pénètre pas dans le volume (V) balayé par le mécanisme de transmission débrayable (6) ou plus exactement par le premier levier (36) du dispositif de commande (35) du mécanisme de débrayage (23) de celui-ci.

Si, pour une raison quelconque, l'un au moins des organes de protection (7) masquant les organes de travail (3) est écarté de sa position opérationnelle (dans ce cas, l'utilisateur ou/et des personnes se trouvant dans le voisinage risquent d'être blessés par les organes de travail (3)), le taquet (10) est introduit, via la commande à distance (11), dans le volume (V) balayé par le premier levier (36) du dispositif de commande (35) (cette position du taquet (10) a été représentée en traits mixtes sur la figure 2 et en traits forts sur la figure 4). Dès l'instant où le premier levier (36) rencontre le taquet (10) au cours de la rotation du mécanisme de transmission débrayable (6) autour de l'axe de rotation (12), il est contraint de pivoter autour de l'axe (38) de la première articulation (37) dans le sens opposé au sens de rotation (31) du mécanisme de transmission débrayable (6). Ce faisant, le premier levier (36) tire sur le deuxième levier (39), ce qui a pour effet de faire tourner l'organe de débrayage (24) par rapport à l'ensemble moteur (13), autour de l'axe géométrique (25), dans le sens opposé au sens de rotation (31) du mécanisme de transmission débrayable (6). Durant cette rotation relative, les plots (28) liant les organes d'extraction (26) à l'organe de débrayage (24), sont contraints de se déplacer dans leur ouverture allongée (29) correspondante en direction de l'extrémité avant (32) de celle-ci. Ce faisant, les organes d'extraction (26) glissent dans leur siège (27) correspondant en direction de l'axe de rotation (12) et repoussent leur élément d'entraînement (17) respectif hors de son logement (19).

L'ensemble récepteur (14) n'est alors plus accouplé à l'ensemble moteur (13) tel que cela est représenté sur la figure 4. Dans cette position débrayée, le dispositif de commande (35) est maintenu en position par arc-boutement comme expliqué auparavant.

On comprendra que le débrayage sera effectué lorsque, en cours d'animation des organes de travail (3), l'un au moins des organes de protection (7) est écarté de sa position opérationnelle ou, lorsque l'un au moins des organes de protection (7) étant écarté de sa position opérationnelle, on actionne la source motrice en vue d'animer les organes de travail (3).

Pour réembrayer le mécanisme de transmission débrayable (6), il faut désactiver la source motrice, remettre le (les) organe(s) de protection (7) dans leur position opérationnelle afin d'extraire le taquet (10) du volume (V) balayé par le premier levier (36) du dispositif de commande (35) et ramener manuellement le premier levier (36) dans sa position initiale. Ce faisant, le premier levier (36) pousse sur le deuxième levier (39), ce qui a pour effet de faire tourner l'organe de débrayage (24) par rapport à l'ensemble moteur (13), autour de l'axe géométrique (25), dans le même sens que le sens de rotation (31) prévu pour le mécanisme de transmission débrayable (6). Durant cette rotation relative, les plots (28) liant les organes d'extraction (26) à l'organe de débrayage (24), sont contraints de se déplacer dans leur ouverture allongée (29) correspondante en direction de l'extrémité arrière (30) de celle-ci. Ce faisant, les organes d'extraction (26) glissent dans leur siège (27) correspondant en s'éloignant de l'axe de rotation (12) et libèrent ainsi à nouveau leur logement (19) respectif. Les éléments d'entraînement (17), poussés vers l'extérieur par leur ressort (20) respectif, peuvent ainsi à nouveau s'engager dans leur logement (19) correspondant lorsque la rotation de l'ensemble moteur (13) est amorcée. Le mécanisme de transmission débrayable (6) est à nouveau embrayé et peut assurer la transmission du mouvement de la source motrice aux organes de travail (3).

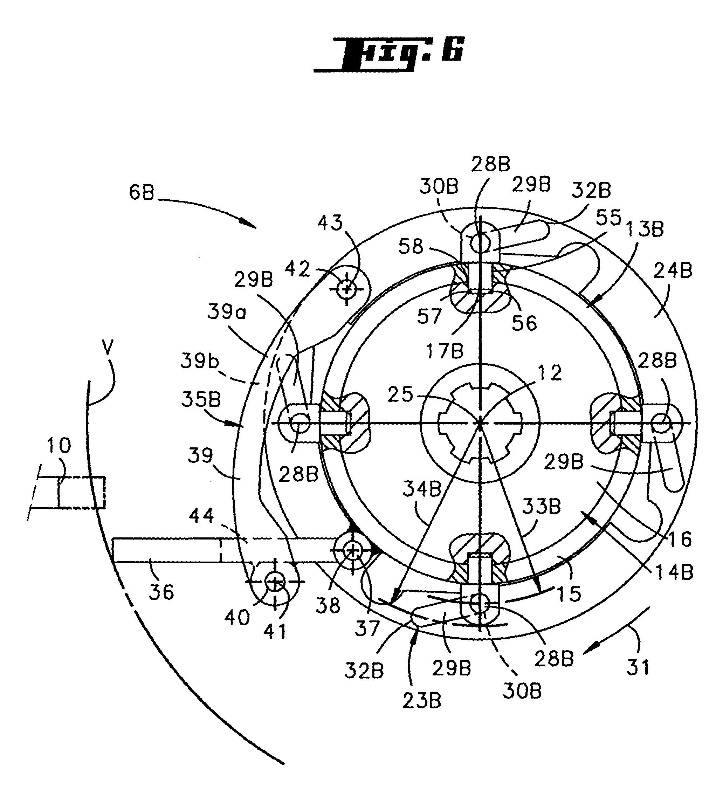

La figure 5 montre un deuxième exemple de réalisation d'un mécanisme de transmission débrayable (6A) selon la présente idée inventive. Ce mécanisme de transmission débrayable (6A) comporte un certain nombre d'éléments qui ont été décrits précédemment. Ces éléments garderont par conséquent le même numéro de repère et ne seront pas redécrits. Il comporte également un certain nombre d'éléments qui sont comparables à des éléments du mécanisme de transmission débrayable (6). Ces éléments seront affectés du même numéro de repère que ces éléments comparables du mécanisme de transmission débrayable (6) suivi de la lettre (A). Ils ne seront décrits que si cela s'avère nécessaire.

Le mécanisme de transmission débrayable (6A) représenté sur la figure 5 est, dans l'ensemble, semblable au mécanisme de transmission débrayable (6), mais il comporte en sus un moyen de déverrouillage (46) destiné à déverrouiller automatiquement le dispositif de commande (35) lorsque celui-ci se trouve en position débrayée et que le mécanisme de transmission débrayable (6A) doit à nouveau être embrayé.

A cet effet, le moyen de déverrouillage (46) comporte un levier de déverrouillage (47) lié à l'ensemble moteur (13A) au moyen d'une articulation (48) du type pivot d'axe (49) au moins sensiblement parallèle à l'axe de rotation (12) autour duquel peut tourner le mécanisme de transmission débrayable (6A) lors de son utilisation. Ce levier de déverrouillage (47) est coudé et l'articulation (48) s'étend entre les extrémités extérieures des branches (50, 51). De cette sorte, le levier de déverrouillage (47) présente deux branches (50, 51). La première branche (50) du levier de déverrouillage (47) est en appui sous l'extrémité du deuxième levier (39), aux alentours de la deuxième articulation (40), lorsque le dispositif de commande (35) se trouve en position débrayée. La deuxième branche (51) du levier de déverrouillage (47), quant à elle, s'étend, à ce moment, sensiblement radialement vers l'extérieur et est décalée par rapport au premier levier (36) en direction de l'axe de rotation (12). Ainsi, lorsque l'organe de protection (7) qui a été écarté de sa position opérationnelle, est à nouveau amené dans ladite position opérationnelle, on introduit une butée extérieure (52) dans le volume (V') balayé par la deuxième branche (51) du levier de déverrouillage (47) lors de la rotation du mécanisme de transmission débrayable (6A). Dès que la deuxième branche (51) arrive en contact avec la butée extérieure (52), le levier de déverrouillage (47) est contraint de pivoter autour de l'axe (49) de l'articulation (48), de telle manière que sa première branche (50) pousse l'extrémité du deuxième levier (39) vers l'extérieur et permet au dispositif de commande (35) de ramener l'organe de débrayage (24) dans la position embrayée. On comprendra bien entendu que le taquet (10) peut également être utilisé comme butée extérieure (52). Il suffit en effet pour cela d'extraire le taquet (10) du volume (V) balayé par le premier levier (36) et de l'introduire dans le volume (V') balayé par la deuxième branche (51) du levier de déverrouillage (47), lorsque l'organe de protection (7) qui a été écarté de sa position opérationnelle, est à nouveau amené dans ladite position opérationnelle.

Après le verrouillage, le levier de déverrouillage (47) est maintenu hors de portée de la buté extérieure (52) au moyen d'un organe de maintien (53) réalisé, dans l'exemple représenté, par un ressort de traction (54) agissant entre la deuxième branche (51) du levier de déverrouillage (47) et l'ensemble moteur (13A). Dans cette position, la première branche (50) du levier de déverrouillage (47) est positionnée de telle manière que le deuxième levier (39) du dispositif de commande (35) puisse à nouveau arriver en contact avec elle lorsque le dispositif de commande (35) vient en position débrayée.

La figure 6 montre un troisième exemple de réalisation d'un mécanisme de transmission débrayable (6B) selon la présente idée inventive. Ce mécanisme de transmission débrayable (6B) comporte un certain nombre d'éléments qui ont été décrits précédemment. Ces éléments garderont par conséquent le même numéro de repère et ne seront pas redécrits. Il comporte également un certain nombre d'éléments qui sont comparables à des éléments du mécanisme de transmission débrayable (6). Ces éléments seront affectés du même numéro de repère que ces éléments comparables du mécanisme de transmission débrayable (6) suivi de la lettre (B). Ils ne seront décrits que si cela s'avère nécessaire.

Le mécanisme de transmission débrayable (6B) représenté sur la figure 6 est, dans l'ensemble, semblable au mécanisme de transmission débrayable (6), sauf en ce qui concerne les éléments d'entraînement (17B) qui sont ici directement liés à l'organe de débrayage (24B). Chaque élément d'entraînement (17B) est en effet guidé en translation dans un siège (55), au moins sensiblement radial, prévu dans l'ensemble moteur (13B) et est lié à l'organe de débrayage (24B) au moyen d'un plot (28B) guidé dans une ouverture allongée (29B) correspondante prévue dans ledit organe de débrayage (24B). Chaque ouverture allongée (29B) est au moins sensiblement rectiligne et est inclinée de telle manière que son extrémité arrière (30B) - compte tenu du sens de rotation (31) du mécanisme de transmission débrayable (6B) - soit radialement moins éloignée de l'axe de rotation (12) que son extrémité avant (32B). La différence de valeur entre le rayon (33B) sur lequel évolue l'extrémité arrière (30B) et le rayon (34B) sur lequel évolue l'extrémité avant (32B) correspond à la course rectiligne de l'élément d'entraînement (17B) correspondant. En position embrayée, le plot (28B) de chaque élément d'entraînement (17B) se trouve dans le voisinage de l'extrémité arrière (30B) de l'ouverture allongée (29B) correspondante (figure 6). En position débrayée par contre, le plot (28B) de chaque élément d'entraînement (17B) se trouve dans le voisinage de l'extrémité avant (32B) de l'ouverture allongée (29B) correspondante.

En position embrayée, chaque élément d'entraînement (17B) est engagé dans un logement (56) correspondant, au moins sensiblement radial, prévu dans l'ensemble récepteur (14B). Chaque élément d'entraînement (17B) ou/et chaque logement (56) peuvent présenter une forme adéquate favorisant l'engagement de l'élément d'entraînement (17B) dans un logement (56). Dans l'exemple représenté, l'extrémité libre de l'élément d'entraînement (17B) et l'entrée du logement (56) présentent chacune, à cet effet, un chanfrein (57, respectivement 58).

Le fonctionnement du mécanisme de transmission débrayable (6B) selon cette troisième forme de réalisation est, en ce qui concerne le dispositif de commande (35B), semblable à celui du mécanisme de transmission débrayable (6). Dès l'instant où le premier levier (36) rencontre le taquet (10) au cours de la rotation du mécanisme de transmission débrayable (6B) autour de l'axe de rotation (12), il est contraint de pivoter autour de l'axe (38) de la première articulation dans le sens opposé au sens de rotation (31) du mécanisme de transmission débrayable (6B). Ce faisant, le premier levier (36) tire sur le deuxième levier (39), ce qui a pour effet de faire tourner l'organe de débrayage (24B) par rapport à l'ensemble moteur (13B), autour de l'axe géométrique (25), dans le sens opposé au sens de rotation (31) du mécanisme de transmission (6B). Durant cette rotation relative, les plots (28B) liant les éléments d'entraînement (17B) à l'organe de débrayage (24B), sont contraints de se déplacer dans leur ouverture allongée (29B) correspondante en direction de l'extrémité avant (32B) de celle-ci. Ce faisant, les éléments d'entraînement (17B) glissent dans leur siège (55) correspondant en s'éloignant de l'axe de rotation (12) et se retirent de leur logement (56) respectif. L'ensemble récepteur (14B) n'est alors plus accouplé à l'ensemble moteur (13B).

On comprendra que le réembrayage du mécanisme de transmission débrayable (6B) s'effectue en faisant tourner l'organe de débrayage (24B) par rapport à l'ensemble moteur (13B) dans le même sens que le sens de rotation (31) prévu pour le mécanisme de transmission débrayable (6B), ce qui a pour effet de faire glisser les éléments d'entraînement (17B) dans leur siège (55) respectif en direction de l'axe de rotation (12) pour les engager à nouveau dans leur logement (56) correspondant.

Finalement, différentes modifications restent possibles, notamment en ce qui concerne la constitution des divers éléments ou par substitution d'équivalents techniques, sans pour autant sortir du domaine de protection défini dans les revendications.

Ainsi, il est parfaitement possible de concevoir un mécanisme de transmission débrayable (6 ; 6A ; 6B) comportant un nombre d'éléments d'entraînement (17 ; 17B) différent de quatre.

Il est également possible de conformer les éléments d'entraînement et leur logement correspondant de telle manière que le mécanisme de transmission débrayable selon l'invention fonctionne en sus comme limiteur de couple.

Il est également envisageable de prévoir un frein additionnel stoppant le mouvement des organes de travail (3) de la machine agricole (1) lorsque le mécanisme de transmission débrayable (6 ; 6A ; 6B) a été débrayé. Ce frein pourrait d'ailleurs être intégré directement dans le mécanisme de transmission débrayable.

## Revendications

1. Mécanisme de transmission débrayable (6 ; 6A ; 6B) destiné, durant son utilisation, à tourner autour d'un axe de rotation (12) et comportant :
- un ensemble moteur (13 ; 13A ; 13B),
- un ensemble récepteur (14 ; 14B),
- au moins un élément d'entraînement (17 ; 17B) engagé dans des logements (19 ; 56) correspondant desdits ensembles (14 ; 14B ; 13 ; 13A ; 13B)
et
- un mécanisme de débrayage (23 ; 23A ; 23B) comportant d'une part un organe de débrayage (24 ; 24B) destiné à agir directement ou indirectement sur lesdits éléments d'entraînement (17 ; 17B) de telle sorte que dans une première position dudit organe de débrayage (24 ; 24B), lesdits éléments d'entraînement (17 ; 17B) sont engagés dans leurs logements (19 ; 56) et que, dans une deuxième position dudit organe de débrayage (24 ; 24B), lesdits éléments d'entraînement (17 ; 17B) sont extraits de leurs logements (19 ; 56), et d'autre part un dispositif de commande (35 ; 35B) destiné à déplacer l'organe de débrayage (24 ; 24B) de sa première position dans sa deuxième position, ledit dispositif de commande (35 ; 35B) comportant un premier levier (36) et ledit organe de débrayage (24 ; 24B) étant guidé en rotation autour d'un axe géométrique (25) au moins sensiblement parallèle à l'axe de rotation (12) du mécanisme de transmission (6 ; 6A ; 6B) de sorte que, lorsque le premier levier (36) rencontre un obstacle (10) au cours de la rotation du mécanisme de transmission (6, 6A ; 6B), l'organe de débrayage (24 ; 24B) est pivoté autour dudit axe géométrique de sa première position dans sa deuxième position,
***caractérisé en ce*** que:
- les éléments d'entraînement (17 ; 17B) sont liés à l'un des ensembles (13; 13A ; 13B ; 14 ; 14B);
- le dispositif de commande (35 ; 35B) permet de placer l'organe de débrayage (24 ; 24B) dans l'une ou l'autre de ses positions,
- le premier levier (36) du dispositif de commande (35 ; 35B) est lié à l'un desdits ensembles (13 ; 13A ; 13B ; 14 ; 14B) au moyen d'une première articulation (37) et pivote autour de l'axe (38) de ladite première articulation (37) et fait pivoter l'organe de débrayage (24 ; 24B), et
- le dispositif de commande (35 ; 35B) comporte un deuxième levier (39) lié au premier levier (36) au moyen d'une deuxième articulation (40) et à l'organe de débrayage (24 ; 24B) au moyen d'une troisième articulation (42).

2. Mécanisme de transmission débrayable selon la revendication 1, ***caractérisé en ce*** que l'axe géométrique (25) autour duquel peut pivoter l'organe de débrayage (24 ; 24B), est au moins sensiblement confondu avec l'axe de rotation (12) autour duquel peut tourner le mécanisme de transmission (6; 6A ; 6B) lors de son utilisation.

3. Mécanisme de transmission débrayable selon la revendication 1 ou 2, ***caractérisé en ce*** que l'axe (38) de ladite première articulation (37) est au moins sensiblement parallèle à l'axe de rotation (12) autour duquel peut tourner le mécanisme de transmission (6 ; 6A ; 6B) lors de son utilisation.

4. Mécanisme de transmission débrayable selon l'une quelconque des revendications 1 à 3, ***caractérisé en ce*** qu'il est prévu un moyen de verrouillage verrouillant automatiquement le dispositif de commande (35 ; 35B) lorsque l'organe de débrayage (24 ; 24B) arrive ou est dans la deuxième position.

5. Mécanisme de transmission débrayable selon la revendication 4, ***caractérisé en ce*** qu'il est prévu un moyen de déverrouillage (46) annulant automatiquement l'action dudit moyen de verrouillage.

6. Mécanisme de transmission débrayable selon la revendication 5, ***caractérisé en ce*** que le moyen de déverrouillage (46) comporte un levier de déverrouillage (47) lié à l'ensemble moteur (13A).

7. Mécanisme de transmission débrayable selon la revendication 6, ***caractérisé en ce*** que le dispositif de commande (35) est lié à l'ensemble moteur (13A) et que le levier de déverrouillage (47) est lié à l'ensemble moteur (13A) au moyen d'une articulation (48) de telle manière que, lorsque ledit levier de déverrouillage (47) rencontre une butée extérieure (52) prévue à cet effet, il pivote autour de l'axe (49) de ladite articulation (48) et annule l'action du moyen de verrouillage.

8. Mécanisme de transmission débrayable selon la revendication 7, ***caractérisé en ce*** qu'après annulation de l'action du moyen de verrouillage, le levier de déverrouillage (47) est maintenu hors de portée de la butée extérieure (52) au moyen d'un organe de maintien (53).

9. Mécanisme de transmission débrayable selon la revendication 8, ***caractérisé en ce*** que l'organe de maintien (53) comporte un ressort (54).

10. Mécanisme de transmission débrayable selon l'une quelconque des revendications 1 à 9, ***caractérisé en ce*** que l'axe (41) de la deuxième articulation (40) et l'axe (43) de la troisième articulation (42) sont au moins sensiblement parallèles à l'axe (38) de la première articulation (37).

11. Mécanisme de transmission débrayable selon la revendication 10 prise en combinaison avec l'une quelconque des revendications 4 à 9, ***caractérisé en ce*** que la première articulation (37), la deuxième articulation (40) et la troisième articulation (42) sont implantées de telle manière que, lorsque l'organe de débrayage (24 ; 24B) se trouve dans sa deuxième position, la position des leviers (36, 39) est verrouillée par arc-boutement.

12. Mécanisme de transmission débrayable selon l'une quelconque des revendications 1 à 11, ***caractérisé en ce*** que chaque élément d'entraînement (17) est guidé dans l'ensemble (14) auquel il est lié, et qu'il est poussé par un ressort (20) dans son logement (19) prévu dans l'autre ensemble (13 ; 13A).

13. Mécanisme de transmission débrayable selon la revendication 12, ***caractérisé en ce*** que l'organe de débrayage (24) agit indirectement sur lesdits éléments d'entraînement (17) au moyen d'organes d'extraction (26) guidés dans l'autre ensemble (13 ; 13A) où sont prévus les logements (19) dans lequel lesdits éléments d'entraînement (17) sont destinés à être engagés.

14. Mécanisme de transmission débrayable selon la revendication 13, ***caractérisé en ce*** que ledit organe d'extraction (26) est lié à l'organe de débrayage (24) au moyen d'un plot (28) guidé dans une ouverture allongée (29) correspondante prévue dans ledit organe de débrayage (24), ladite ouverture allongée (29) étant telle que, lors du passage de l'organe de débrayage (24) de la première position dans la deuxième position, l'organe d'extraction (26) extraie l'élément d'entraînement (17) correspondant de son logement (19).

15. Mécanisme de transmission débrayable selon l'une quelconque des revendications 1 à 11, ***caractérisé en ce*** que chaque élément d'entraînement (17B) est guidé dans l'ensemble (13B) auquel il est lié, et qu'il est maintenu par l'organe de débrayage (24B) dans son logement (56) prévu dans l'autre ensemble (14B).

16. Mécanisme de transmission débrayable selon la revendication 15, ***caractérisé en ce*** que lesdits éléments d'entraînement (17B) sont liés à l'organe de débrayage (24B) au moyen de plots (28B) correspondant guidés chacun dans une ouverture allongée (29B) correspondante prévue dans ledit organe de débrayage (24B), ladite ouverture allongée (29B) étant telle que lors du passage de l'organe de débrayage (24B) de la première position dans la deuxième position, les éléments d'entraînement (17B) soient extraits de leur logement (56).

17. Mécanisme de transmission débrayable selon la revendication 14 ou 16, ***caractérisé en ce*** que lesdites ouvertures allongées (29 ; 29B) sont au moins sensiblement rectilignes.

18. Mécanisme de transmission débrayable selon l'une quelconque des revendications 12 à 17, ***caractérisé en ce*** que chaque élément d'entraînement (17 ; 17B) est guidé dans un siège (18 ; 55) correspondant prévu dans l'ensemble (14 ; 13B) auquel il est lié.

19. Mécanisme de transmission débrayable selon la revendication 13 ou 14,
***caractérisé en ce*** que chaque organe d'extraction (26) est guidé dans un siège (27) correspondant prévu dans l'autre ensemble (14) où est prévu le logement (19) dans lequel l'élément d'entraînement (17) correspondant est destiné à être engagé.

20. Mécanisme de transmission débrayable selon la revendication 18 ou 19, ***caractérisé en ce*** que lesdits éléments d'entraînement (17 ; 17B) ou/et lesdits organes d'extraction (26) sont guidés en translation dans leur siège (18 ; 55 ; 27) correspondant.

21. Mécanisme de transmission débrayable selon la revendication 20, ***caractérisé en ce*** que lesdits sièges (18 ; 55 ; 27) s'étendent au moins sensiblement radialement.

22. Mécanisme de transmission débrayable selon l'une quelconque des revendications 1 à 21, ***caractérisé en ce*** qu'il est prévu plusieurs éléments d'entraînement (17 ; 17B) au moins sensiblement régulièrement répartis autour de l'axe de rotation (12) autour duquel peut tourner le mécanisme de transmission (6 ; 6A ; 6B) lors de son utilisation.

23. Mécanisme de transmission débrayable selon l'une quelconque des revendications 1 à 22, ***caractérisé en ce*** que l'organe de débrayage (24 ; 24B) entoure les ensembles (13 ; 13A ; 13B ; 14 ; 14B).

24. Mécanisme de transmission débrayable selon la revendication 23, ***caractérisé en ce*** que l'organe de débrayage (24 ; 24B) est constitué d'une couronne circulaire plate.

25. Mécanisme de transmission débrayable selon l'une quelconque des revendications 1 à 24, ***caractérisé en ce*** que l'ensemble moteur (13 ; 13A; 13B) s'étend autour de l'ensemble récepteur (14 ; 14B).

26. Mécanisme de transmission débrayable selon la revendication 25, ***caractérisé en ce*** que le dispositif de commande (35 ; 35B) est lié à l'ensemble moteur (13 ; 13A ; 13B).

27. Machine agricole comportant des organes de travail (3) destinés à être animés par une source motrice (2) au moyen d'organes de transmission (5) comportant un mécanisme de transmission débrayable (6 ; 6A ; 6B), ***caractérisée en ce*** que ce dernier est un mécanisme de transmission débrayable (6 ; 6A ; 6B) selon l'une quelconque des revendications 1 à 26, un obstacle (10) étant introduit dans le volume balayé par ledit mécanisme de transmission débrayable (6 ; 6A ; 6B) lorsque la transmission du mouvement entre la source motrice (2) et les organes de travail (3) doit être interrompue.

28. Machine agricole selon la revendication 27, ***caractérisée en ce*** qu'elle comporte en sus des organes de protection (7) masquant, en position opérationnelle, lesdits organes de travail (3) ou/et certains au moins desdits organes de transmission (5), ledit obstacle (10) étant introduit dans le volume balayé par le mécanisme de transmission débrayable (6 ; 6A ; 6B) lorsque l'un au moins desdits organes de protection (7) est écarté de sa position opérationnelle.

29. Machine agricole selon la revendication 27 ou 28, ***caractérisée en ce*** que le mécanisme de transmission débrayable (6 ; 6A ; 6B) est un mécanisme de transmission débrayable selon l'une quelconque des revendications 7 à 9, une butée extérieure (52) étant introduite dans le volume balayé par ledit mécanisme de transmission débrayable (6 ; 6A ; 6B) lorsque la transmission du mouvement entre la source motrice (2) et les organes de travail (3) doit être assurée.

30. Machine agricole selon les revendications 28 et 29, ***caractérisée en ce*** que la butée extérieure (52) est mise en place lorsque lesdits organes de protection (7) sont remis en position opérationnelle.

## Patentansprüche

1. Ausschaltbare Kraftübertragungsvorrichtung (6; 6A; 6B), die sich während ihres Betriebs um eine Drehachse (12) drehen soll und
- eine Antriebseinheit (13; 13A; 13B),
- eine Abtriebseinheit (14; 14B),
- mindestens ein mit den entsprechenden Aufnahmen (19; 56) der Einheiten (14; 14B; 13; 13A; 13B) in Eingriff stehendes Antriebselement (17; 17B) und
- einen Ausrückmechanismus (23; 23A; 23B) mit einerseits einem Ausrückglied (24; 24B) zur direkten oder indirekten Einwirkung auf die Antriebselemente (17; 17B), so daß die Antriebselemente (17; 17B) in einer ersten Stellung des Ausrückglieds (24; 24B) mit ihren Aufnahmen (19; 56) in Eingriff stehen und in einer zweiten Stellung des Ausrückglieds (24; 24B) aus ihren Aufnahmen (19; 56) herausgezogen sind, und andererseits einer Steuervorrichtung (35; 35B) zur Bewegung des Ausrückglieds (24; 24B) aus seiner ersten Stellung in seine zweite Stellung, wobei die Steuervorrichtung (35; 35B) einen ersten Hebel (36) aufweist und das Ausrückglied (24; 24B) um eine zumindest im wesentlichen parallel zur Drehachse (12) der Kraftübertragungsvorrichtung (6; 6A; 6B) verlaufende geometrische Achse (25) drehbar geführt wird, so daß das Ausrückglied (24; 24B) um die geometrische Achse aus seiner ersten Stellung in seine zweite Stellung geschwenkt wird, wenn der erste Hebel (36) im Verlauf der Drehung der Kraftübertragungsvorrichtung (6; 6A; 6B) auf ein Hindernis (10) trifft, umfaßt,
***dadurch gekennzeichnet****,* daß
- die Antriebselemente (17; 17B) mit einer der Einheiten (13; 13A; 13B; 14; 14B) verbunden sind;
- die Steuervorrichtung (35; 35B) die Positionierung des Ausrückglieds (24; 24B) in die eine oder die andere seiner Stellungen gestattet,
- der erste Hebel (36) der Steuervorrichtung (35; 35B) mittels eines ersten Gelenks (37) mit einer der Einheiten (13; 13A; 13B; 14; 14B) verbunden ist und um die Achse (38) des ersten Gelenks (37) schwenkt und das Ausrückglied (24; 24B) schwenkt, und
- die Steuervorrichtung (35; 35B) einen zweiten Hebel (39) aufweist, der mittels eines zweiten Gelenks (40) mit dem ersten Hebel (36) und mittels eines dritten Gelenks (42) mit dem Ausrückglied (24; 24B) verbunden ist.

2. Ausschaltbare Kraftübertragungsvorrichtung nach Anspruch 1, ***dadurch gekennzeichnet****,* daß die geometrische Achse (25), um die das Ausrückglied (24; 24B) schwenken kann, zumindest im wesentlichen mit der Drehachse (12), um die sich die Kraftübertragungsvorrichtung (6; 6A; 6B) bei ihrem Betrieb drehen kann, zusammenfällt.

3. Ausschaltbare Kraftübertragungsvorrichtung nach Anspruch 1 oder 2, ***dadurch gekennzeichnet****,* daß die Achse (38) des ersten Gelenks (37) zumindest im wesentlichen parallel zur Drehachse (12) verläuft, um die sich die Kraftübertragungsvorrichtung (6; 6A; 6B) bei ihrem Betrieb drehen kann.

4. Ausschaltbare Kraftübertragungsvorrichtung nach irgend einem der Ansprüche 1 bis 3, ***dadurch gekennzeichnet****,* daß ein Verriegelungsmittel vorgesehen ist, das die Steuervorrichtung (35; 35B) automatisch verriegelt, wenn das Ausrückglied (24; 24B) in die zweite Stellung gelangt oder sich darin befindet.

5. Ausschaltbare Kraftübertragungsvorrichtung nach Anspruch 4, ***dadurch gekennzeichnet****,* daß ein Entriegelungsmittel (46) vorgesehen ist, das die Wirkung des Verriegelungsmittels automatisch außer Kraft setzt.

6. Ausschaltbare Kraftübertragungsvorrichtung nach Anspruch 5, ***dadurch gekennzeichnet****,* daß das Entriegelungsmittel (46) einen mit der Antriebseinheit (13A) verbundenen Entriegelungshebel (47) umfaßt.

7. Ausschaltbare Kraftübertragungsvorrichtung nach Anspruch 6, ***dadurch gekennzeichnet****,* daß die Steuervorrichtung (35) mit der Antriebseinheit (13A) verbunden ist und daß der Entriegelungshebel (47) mittels eines Gelenks (48) mit der Antriebseinheit (13A) verbunden ist, so daß der Entriegelungshebel (47) um die Achse (49) des Gelenks (48) schwenkt und die Wirkung des Verriegelungsmittels außer Kraft setzt, wenn der Entriegelungshebel (47) auf einen äußeren Anschlag (52) trifft, der zu diesem Zweck vorgesehen ist.

8. Ausschaltbare Kraftübertragungsvorrichtung nach Anspruch 7, ***dadurch gekennzeichnet****,* daß der Entriegelungshebel (47) nach der Außerkraftsetzung der Wirkung des Verriegelungsmittels mittels eines Halteelementes (53) außerhalb der Reichweite des äußeren Anschlags (52) gehalten wird.

9. Ausschaltbare Kraftübertragungsvorrichtung nach Anspruch 8, ***dadurch gekennzeichnet****,* daß das Halteelement (53) eine Feder (54) umfaßt.

10. Ausschaltbare Kraftübertragungsvorrichtung nach irgend einem der Ansprüche 1 bis 9, ***dadurch gekennzeichnet,*** daß die Achse (41) des zweiten Gelenks (40) und die Achse (43) des dritten Gelenks (42) zumindest im wesentlichen parallel zur Achse (38) des ersten Gelenks (37) verlaufen.

11. Ausschaltbare Kraftübertragungsvorrichtung nach Anspruch 10 in Kombination mit irgend einem der Ansprüche 4 bis 9, ***dadurch gekennzeichnet****,* daß das erste Gelenk (37), das zweite Gelenk (40) und das dritte Gelenk (42) so angeordnet sind, daß die Stellung der Hebel (36, 39) durch Verstrebung verriegelt wird, wenn sich das Ausrückglied (24; 24B) in seiner zweiten Stellung befindet.

12. Ausschaltbare Kraftübertragungsvorrichtung nach irgend einem der Ansprüche 1 bis 11, ***dadurch gekennzeichnet****,* daß jedes Antriebselement (17) in der Einheit (14) geführt wird, mit der es verbunden ist, und daß es durch eine Feder (20) in seine in der anderen Einheit (13; 13A) vorgesehene Aufnahme (19) gedrückt wird.

13. Ausschaltbare Kraftübertragungsvorrichtung nach Anspruch 12, ***dadurch gekennzeichnet****,* daß das Ausrückglied (24) mittels in der anderen Einheit (13; 13A), in der die Aufnahmen (19) vorgesehen sind, mit denen die Antriebselemente (17) in Eingriff gebracht werden sollen, geführten Ausrückelementen (26) indirekt auf die Antriebselemente (17) einwirkt.

14. Ausschaltbare Kraftübertragungsvorrichtung nach Anspruch 13, ***dadurch gekennzeichnet****,* daß das Ausrückelement (26) mittels eines in einer entsprechenden länglichen Öffnung (29), die in dem Ausrückelement (24) vorgesehen ist, geführten Nockens (28) mit dem Ausrückelement (24) verbunden ist, wobei die längliche Öffnung (29) derart ist, daß das Ausrückelement (26) das entsprechende Antriebselement (17) aus seiner Aufnahme (19) herauszieht, wenn sich das Ausrückglied (24) aus der ersten Stellung in die zweite Stellung bewegt.

15. Ausschaltbare Kraftübertragungsvorrichtung nach irgend einem der Ansprüche 1 bis 11, ***dadurch gekennzeichnet****,* daß jedes Antriebselement (17B) in der Einheit (13B) geführt wird, mit der es verbunden ist, und daß es durch das Ausrückglied (24B) in seiner in der anderen Einheit (14B) vorgesehenen Aufnahme (56) gehalten wird.

16. Ausschaltbare Kraftübertragungsvorrichtung nach Anspruch 15, ***dadurch gekennzeichnet****,* daß die Antriebselemente (17B) mittels entsprechender Nocken (28B), die jeweils in einer in dem Ausrückglied (24B) vorgesehenen entsprechenden länglichen Öffnung (29B) geführt werden, mit dem Ausrückglied (24B) verbunden sind, wobei die längliche Öffnung (29B) derart ist, daß die Antriebselemente (17B) aus ihrer Aufnahme (56) herausgezogen werden, wenn sich das Ausrückglied (24B) aus der ersten Stellung in die zweite Stellung bewegt.

17. Ausschaltbare Kraftübertragungsvorrichtung nach Anspruch 14 oder 16, ***dadurch gekennzeichnet****,* daß die länglichen Öffnungen (29; 29B) zumindest im wesentlichen geradlinig sind.

18. Ausschaltbare Kraftübertragungsvorrichtung nach irgend einem der Ansprüche 12 bis 17, ***dadurch gekennzeichnet****,* daß jedes Antriebselement (17; 17B) in einer entsprechenden Aufnahme (18; 55) geführt wird, die in der Einheit (14; 13B) vorgesehen ist, mit der es verbunden ist.

19. Ausschaltbare Kraftübertragungsvorrichtung nach Anspruch 13 oder 14, ***dadurch gekennzeichnet****,* daß jedes Ausrückelement (26) in einer entsprechenden Aufnahme (27) geführt wird, die in der anderen Einheit (14) vorgesehen ist, in der die Aufnahme (19) vorgesehen ist, mit der das entsprechende Antriebselement (17) in Eingriff gebracht werden soll.

20. Ausschaltbare Kraftübertragungsvorrichtung nach Anspruch 18 oder 19, ***dadurch gekennzeichnet*,** daß die Antriebselemente (17; 17B) und/oder die Ausrückelemente (26) in ihrer entsprechenden Aufnahme (18; 55; 27) translatorisch geführt werden.

21. Ausschaltbare Kraftübertragungsvorrichtung nach Anspruch 20, ***dadurch gekennzeichnet****,* daß sich die Aufnahmen (18; 55; 27) zumindest im wesentlichen radial erstrecken.

22. Ausschaltbare Kraftübertragungsvorrichtung nach irgend einem der Ansprüche 1 bis 21, ***dadurch gekennzeichnet****,* daß mehrere Antriebselemente (17; 17B) vorgesehen sind, die zumindest im wesentlichen gleichmäßig um die Drehachse (12) verteilt sind, um die sich die Kraftübertragungsvorrichtung (6; 6A; 6B) bei ihrem Betrieb drehen kann.

23. Ausschaltbare Kraftübertragungsvorrichtung nach irgend einem der Ansprüche 1 bis 22, ***dadurch gekennzeichnet****,* daß das Ausrückelement (24; 24B) die Einheiten (13; 13A; 13B; 14; 14B) umgibt.

24. Ausschaltbare Kraftübertragungsvorrichtung nach Anspruch 23, ***dadurch gekennzeichnet*,** daß das Ausrückelement (24; 24B) aus einem kreisförmigen, flachen Ring besteht.

25. Ausschaltbare Kraftübertragungsvorrichtung nach irgend einem der Ansprüche 1 bis 24, ***dadurch gekennzeichnet****,* daß sich die Antriebseinheit (13; 13A; 13B) um die Abtriebseinheit (14; 14B) erstreckt.

26. Ausschaltbare Kraftübertragungsvorrichtung nach Anspruch 25, ***dadurch gekennzeichnet****,* daß die Steuervorrichtung (35; 35B) mit der Antriebseinheit (13; 13A; 13B) verbunden ist.

27. Landmaschine mit Arbeitselementen (3), die durch eine Antriebsquelle (2) mittels Kraftübertragungselementen (5) mit einer ausschaltbaren Kraftübertragungsvorrichtung (6; 6A; 6B) in Gang gesetzt werden sollen,
***dadurch gekennzeichnet****,* daß diese letztere eine ausschaltbare Kraftübertragungsvorrichtung (6; 6A; 6B) nach irgend einem der Ansprüche 1 bis 26 ist, wobei in den von der ausschaltbaren Kraftübertragungsvorrichtung (6; 6A; 6B) durchquerten Raum ein Hindernis (10) eingeführt wird, wenn die Übertragung der Bewegung zwischen der Antriebsquelle (2) und den Arbeitselementen (3) unterbrochen werden soll.

28. Landmaschine nach Anspruch 27, ***dadurch gekennzeichnet*,** daß sie des weiteren Schutzelemente (7) enthält, die in Betriebsstellung die Arbeitselemente (3) und/oder zumindest bestimmte der Kraftübertragungselemente (5) verdecken, wobei das Hindernis (10) in den von der ausschaltbaren Kraftübertragungsvorrichtung (6; 6A; 6B) durchquerten Raum eingeführt wird, wenn mindestens eines der Schutzelemente (7) aus seiner Betriebsstellung entfernt wird.

29. Landmaschine nach Anspruch 27 oder 28, ***dadurch gekennzeichnet****,* daß die ausschaltbare Kraftübertragungsvorrichtung (6; 6A; 6B) eine ausschaltbare Kraftübertragungsvorrichtung nach irgend einem der Ansprüche 7 bis 9 ist, wobei in den von der ausschaltbaren Kraftübertragungsvorrichtung (6; 6A; 6B) durchquerten Raum ein äußerer Anschlag (52) eingeführt wird, wenn die Bewegungsübertragung zwischen der Antriebsquelle (2) und den Arbeitselementen (3) gewährleistet werden soll.

30. Landmaschine nach den Ansprüchen 28 und 29, ***dadurch gekennzeichnet,*** daß der äußere Anschlag (52) angeordnet wird, wenn die Schutzelemente (7) wieder in Betriebsstellung positioniert werden.

## Claims

1. Declutchable transmission mechanism (6; 6A; 6B) intended, during use, to rotate about an axis of rotation (12) and comprising:
- a driving unit (13; 13A; 13B),
- a receiving unit (14; 14B),
- at least one driving element (17; 17B) engaged in corresponding housings (19; 56) of the said units (14; 14B; 13; 13A; 13B) and
- a clutch mechanism (23; 23A; 23B) comprising, on the one hand, a clutch element (24; 24B) intended to act directly or indirectly on the said drive elements (17; 17B) so that when the said clutch element (24; 24B) is in a first position the said drive elements (17; 17B) are engaged in their housings (19; 56) and so that when the said clutch element (24; 24B) is in a second position the said drive elements (17; 17B) are extracted from their housings (19; 56) and, on the other hand, a control device (35; 35B) intended to move the clutch element (24; 24B) from its first position into its second position, the said control device (35; 35B) comprising a first lever (36) and the said clutch element (24; 24B) being guided in rotation about a geometric axis (25) at least substantially parallel to the axis of rotation (12) of the transmission mechanism (6; 6A; 6B) so that when the first lever (36) encounters an obstacle (10) as the transmission mechanism (6, 6A; 6B) rotates, the clutch element (24; 24B) is pivoted about the said geometric axis from its first position to its second position,
***characterized in*** that:
- the drive elements (17; 17B) are connected to one of the units (13; 13A; 13B; 14; 14B);
- the control device (35; 35B) allows the clutch element (24; 24B) to be placed in one or the other of its positions,
- the first lever (36) of the control device (35; 35B) is connected to one of the said units (13; 13A; 13B; 14; 14B) by means of a first articulation (37) and pivots about the axis (38) of the said first articulation (37) and causes the clutch element (24; 24B) to pivot, and
- the control device (35; 35B) comprises a second lever (39) connected to the first lever (36) by means of a second articulation (40) and to the clutch element (24; 24B) by means of a third articulation (42).

2. Declutchable transmission mechanism according to Claim 1, ***characterized in*** that the geometric axis (25) about which the clutch element (24; 24B) can pivot is at least substantially coincident with the axis of rotation (12) about which the transmission mechanism (6; 6A; 6B) can rotate when it is in use.

3. Declutchable transmission mechanism according to Claim 1 or 2, ***characterized in*** that the axis (38) of the said first articulation (37) is at least substantially parallel to the axis of rotation (12) about which the transmission mechanism (6; 6A; 6B) can rotate when it is in use.

4. Declutchable transmission mechanism according to any one of Claims 1 to 3, characterized in that a locking means automatically locking the control device (35; 35B) when the clutch element (24; 24B) reaches or is in the second position is provided.

5. Declutchable transmission mechanism according to Claim 4, ***characterized in*** that an unlocking means (46) automatically cancelling the action of the said locking means is provided.

6. Declutchable transmission mechanism according to Claim 5, ***characterized in*** that the unlocking means (46) comprises an unlocking lever (47) connected to the driving unit (13A).

7. Declutchable transmission mechanism according to Claim 6, ***characterized in*** that the control device (35) is connected to the driving unit (13A) and in that the unlocking lever (47) is connected to the driving unit (13A) by means of an articulation (48) so that when the said unlocking lever (47) encounters an outer stop (52) provided for this purpose, it pivots about the axis (49) of the said articulation (48) and cancels the action of the locking means.

8. Declutchable transmission mechanism according to Claim 7, ***characterized in*** that after the action of the locking means has been cancelled, the unlocking lever (47) is kept out of reach of the outer stop (52) by means of a holding element (53).

9. Declutchable transmission mechanism according to Claim 8, ***characterized in*** that the holding element (53) comprises a spring (54).

10. Declutchable transmission mechanism according to any one of Claims 1 to 9, ***characterized in*** that the axis (41) of the second articulation (40) and the axis (43) of the third articulation (42) are at least substantially parallel to the axis (38) of the first articulation (37).

11. Declutchable transmission mechanism according to Claim 10 taken in combination with any one of Claims 4 to 9, ***characterized in*** that the first articulation (37), the second articulation (40) and the third articulation (42) are arranged in such a way that when the clutch element (24; 24B) is in its second position, the position of the levers (36, 39) is locked by interference.

12. Declutchable transmission mechanism according to any one of Claims 1 to 11, ***characterized in*** that each drive element (17) is guided in the unit (14) to which it is connected, and in that it is pushed by a spring (20) into its housing (19) provided in the other unit (13; 13A).

13. Declutchable transmission mechanism according to Claim 12, ***characterized in*** that the clutch element (24) acts indirectly on the said drive elements (17) by means of extraction elements (26) guided in the other unit (13; 13A) in which the housings (19) in which the said drive elements (17) are intended to be engaged are provided.

14. Declutchable transmission mechanism according to Claim 13, ***characterized in*** that the said extraction element (26) is connected to the clutch element (24) by means of a stud (28) guided in a corresponding elongate opening (29) provided in the said clutch element (24), the said elongate opening (29) being such that as the clutch element (24) moves from the first position into the second position, the extraction element (26) extracts the corresponding drive element (17) from its housing (19).

15. Declutchable transmission mechanism according to any one of Claims 1 to 11, ***characterized in*** that each drive element (17B) is guided in the unit (13B) to which it is connected, and in that it is held in its housing (56) provided in the other unit (14B) by the clutch element (24B).

16. Declutchable transmission mechanism according to Claim 15, ***characterized in*** that the said drive elements (17B) are connected to the clutch element (24B) by means of corresponding studs (28B) each guided in a corresponding elongate opening (29B) provided in the said clutch element (24B), the said elongate opening (29B) being such that as the clutch element (24B) moves from its first position to its second position the drive elements (17B) are extracted from their housing (56).

17. Declutchable transmission mechanism according to Claim 14 or 16, ***characterized in*** that the said elongate openings (29; 29B) are at least substantially rectilinear.

18. Declutchable transmission mechanism according to any one of Claims 12 to 17, ***characterized in*** that each drive element (17; 17B) is guided in a corresponding seat (18; 55) provided in the unit (14; 13B) to which it is connected.

19. Declutchable transmission mechanism according to Claim 13 or 14, ***characterized in*** that each extraction element (26) is guided in a corresponding seat (27) provided in the other unit (14) in which the housing (19) in which the corresponding drive element (17) is intended to be engaged is provided.

20. Declutchable transmission mechanism according to Claim 18 or 19, ***characterized in*** that the said drive elements (17; 17B) or/and the said extraction elements (26) are guided in translation in their corresponding seat (18; 55; 27).

21. Declutchable transmission mechanism according to Claim 20, ***characterized in*** that the said seats (18; 55; 27) extend at least substantially radially.

22. Declutchable transmission mechanism according to any one of Claims 1 to 21, ***characterized in*** that several drive elements (17; 17B) are provided, which are at least substantially uniformly distributed about the axis of rotation (12) about which the transmission mechanism (6; 6A; 6B) can rotate when it is in use.

23. Declutchable transmission mechanism according to any one of Claims 1 to 22, ***characterized in*** that the clutch element (24; 24B) surrounds the units (13; 13A; 13B; 14; 14B).

24. Declutchable transmission mechanism according to Claim 23, ***characterized in*** that the clutch element (24; 24B) consists of a flat circular ring.

25. Declutchable transmission mechanism according to any one of Claims 1 to 24, ***characterized in*** that the driving unit (13; 13A; 13B) extends around the receiving unit (14; 14B).

26. Declutchable transmission mechanism according to Claim 25, ***characterized in*** that the control device (35; 35B) is connected to the driving unit (13; 13A; 13B).

27. Agricultural machine comprising working elements (3) intended to be driven by a power source (2) by means of transmission elements (5) comprising a declutchable transmission mechanism (6; 6A; 6B), ***characterized in*** that the latter is a declutchable transmission mechanism (6; 6A; 6B) according to any one of Claims 1 to 26, an obstacle (10) being introduced into the volume swept by the said declutchable transmission mechanism (6; 6A; 6B) when the transmission of motion between the power source (2) and the working elements (3) has to be interrupted.

28. Agricultural machine according to Claim 27, ***characterized in*** that it additionally comprises protecting elements (7) which, in the operational position, hide the said working elements (3) or/and at least some of the said transmission elements (5), the said obstacle (10) being introduced into the volume swept by the declutchable transmission mechanism (6; 6A; 6B) when at least one of the said protecting elements (7) is moved away from its operational position.

29. Agricultural machine according to Claim 27 or Claim 28, ***characterized in*** that the declutchable transmission mechanism (6; 6A; 6B) is a declutchable transmission mechanism according to any one of Claims 7 to 9, an outer stop (52) being introduced into the volume swept by the said declutchable transmission mechanism (6; 6A; 6B) when the transmission of motion between the power source (2) and the working elements (3) is to be ensured.

30. Agricultural machine according to Claims 28 and 29, ***characterized in*** that the outer stop (52) is put in position when the said protecting elements (7) are returned to the operational position.
